# EUROPÄISCHE PATENTANMELDUNG

(11) **EP 1 919 043 A2**
(43) Veröffentlichungstag der Anmeldung: **07.05.2008**
(21) Anmeldenummer: 07450134.7
(22) Anmeldetag: 09.08.2007
(51) Int. Cl.: H01S 3/113

(54) **Verfahren und Anordnung zur Regelung der Laser-Pulsenergie**

(30) Priorität: 24.08.2006 AT 14142006
(71) Anmelder: CTR Carinthian Tech Research AG, 9524 Villach/St. Magdalen (AT)
(72) Erfinder: Kroupa, Gerhard, 9241 Wernberg (AT)
(74) Vertreter: Beer, Manfred

(57) **Zusammenfassung**

Die Erfindung betrifft ein Verfahren zur einfachen und energieeffizienten Regelung der Pulsenergie gepumpter Laser. Erfindungsgemäß wird der Einsatz eines sättigbaren Absorbers (30, 31) als optischer Güteschalter innerhalb des Laserresonators vorgeschlagen, wobei dieser mit Hilfe einer unabhängig von der Pumpleistung der Laserpumpquellen (20) in ihrer Intensität regelbaren Steuerlichtquelle (40) teilweise vorgesättigt wird, wodurch sich die effektive Durchschaltenergie des sättigbaren Absorbers verändern und somit die Laser-Pulsenergie auf einfache Art und Weise regeln lässt. Besonders vorteilhaft ist das erfindungsgemäße Verfahren zur Regelung der Energie von Laserpulsen in kompakten, beispielsweise monolithisch aufgebauten Laserlichtquellen.

## Beschreibung

Die Erfindung betrifft ein Verfahren zum Beeinflussen der Pulsenergie eines gepulsten Lasers. Weiters betrifft die Erfindung eine Anordnung zum Durchführen dieses Verfahrens.

Im Bereich der Lasertechnologie existiert eine steigende Nachfrage nach energieeffizienten, mobilen und gleichzeitig kostengünstigen Laserlichtquellen. Neben Halbleiterlasern haben, insbesonders für höhere Laserenergien, gepumpte Festkörperlaser einen wesentlichen Anteil an diesem Marktsegment, wobei beispielhafte Applikationen derartiger Laser von der Zündung von Treibstoff-GasGemischen in Motoren über die (Mikro-)Materialbearbeitung, inklusive Lasergravur- und Markierungsapplikationen, bis hin zu Anwendungen in der chemischphysikalischen Analytik, beispielsweise der Laserinduzierten Spektroskopie (LIBS, LIPS), reichen.

Während manche Anwendungen, wie beispielsweise das Zünden von Brennstoffen mittels Laser oder auch Laserschneiden, primär Anforderungen bezüglich der Mindest-Pulsenergie stellen, ist in anderen Applikationen eine Regelung der Laserpulsenergie vorteilhaft. Beispielsweise ist für laserspektroskopische bzw. laserinduzierte spektroskopische Verfahren eine Anpassung der Pulsenergie an das zu untersuchende Objekt sinnvoll, um ein optimales Signal bei geringstmöglicher Schädigung des untersuchten Objektes zu erhalten. Je nach Material und Anwendung sind hier die erforderlichen Pulsenergien unterschiedlich; beispielsweise erlaubt bzw. erfordert die laserinduzierte Plasmaspektroskopie an Metallschmelzen höhere Pulsenergien als beispielsweise die Untersuchung von Kunstwerken oder Edelsteinen. Analoges gilt in Lasergravur- oder Lasermarkierungsanwendungen. Unterschiedliche Materialien, wie verschiedene Glassorten oder Kunststoffe, haben unterschiedliche Anforderungen und Toleranzbereiche bezüglich der Laserenergie. Um einen klar definierten, lokal begrenzten Effekt ohne unzulässige Schädigung des umgebenden Materials zu gewährleisten, ist in solchen Anwendungen eine korrekte Auslegung der Laserpulsenergie unbedingt erforderlich. Ähnliches trifft beispielsweise auch beim Laserschweißen zu, insbesonders beim Verarbeiten empfindlicher Materialien. In all diesen Applikationen ist eine Laserlichtquelle mit regelbarer Pulsenergie flexibler einsetzbar und somit technisch wie kommerziell einer Laserlichtquelle mit fixer Pulsenergie vorzuziehen.

Praktisch zeigt sich, dass die Möglichkeiten zur Regelung der Laserenergie, insbesonders bei kompakten, gepulsten Lasern, begrenzt sind. Bei kontinuierlich emittierenden (CW) Lasern ist die Laserleistung zumeist gut regelbar, aber im Vergleich zu gepulsten Lasern gering. Zur Erzeugung von Laserpulsen hoher Energie hat sich deshalb die Verwendung von aktiven oder passiven Güteschaltern innerhalb des Laserresonators ("Q-Switching", "giant pulse formation") etabliert.

Aus der Literatur sind eine Vielzahl derartiger Laserlichtquellen vorbekannt. Güteschalter werden, in unterschiedlichsten Formen, in praktisch allen Arten gepulster Laser eingesetzt. Beim Versuch, basierend auf diesem Prinzip eine kompakte, mobile Laserlichtquelle mit regelbarer Pulsenergie zu bauen, zeigen sich aber praktische Grenzen.

Eine verbreitete Form der optischen Güteschaltung in Lasern basiert auf der Verwendung passiver Elemente, so genannter sättigbarer Absorber. Das Funktionsprinzip derartiger Güteschalter ist, unterhalb einer bestimmten Energieschwelle im Laserresonator eine effiziente Rückkopplung im Resonator zu unterbinden und dadurch die Emissionsstimulation zu verhindern. Erst bei Erreichen eines entsprechend hohen Energieniveaus wird der sättigbare Absorber - reversibel - transparent, wodurch die effiziente Stimulation der Laseremission möglich und in Folge die gespeicherte Energie in Form eines intensiven Laserpulses abgegeben wird. Die Energie des Laserpulses wird dabei von der Durchschaltschwelle des sättigbaren Absorbers bestimmt, die im wesentlichen von dessen Dicke und Zusammensetzung abhängt. Während die von der Laserlichtquelle emittierte Pulssequenz über die Pumpleistung, mit der dem Lasermedium Energie zugeführt wird, gesteuert werden kann, ist die Pulsenergie durch Geometrie und Materialeigenschaften des sättigbaren Absorbers festgelegt.

Aus diesem Grund verwenden vorbekannte gepulste Laser mit variabler Pulsenergie vorzugsweise aktive Güteschalter, zumeist auf elektro-optischer (elektro-optische Modulatoren, EOM, z.B. Pockels-Zelle, Kerr-Zelle) oder akusto-optischer (akusto-optische Modulatoren, AOM, z.B. Bragg-Zelle) Basis. Wie in einer Vielzahl vorbekannter Patentschriften und Publikationen beschrieben, erlauben diese aktiv ansteuer- und somit exakt kontrollierbaren Güteschalter sowohl eine Steuerung der Laserpulszeiten als auch der Laserpulsenergien. Wesentliche Nachteile derartiger Systeme sind, dass i) ein präziser Betrieb der aktiven Güteschalter erforderlich ist, was eine komplexe und entsprechend aufwendige Steuerung erfordert, sowie ii) dass aktive Güteschalter in der Regel diskrete optische Baugruppen darstellen und/oder weitere optische Elemente, beispielsweise Polarisationsfilter, erfordern. Somit sind derartige Laserlichtquellen in der Regel vergleichsweise groß, aufwändig in der Herstellung und anspruchsvoll im Betrieb. Überdies erfordern akusto-optische System eine Hochfrequenzelektronik bzw. elektro-optische Zellen eine Hochspannungsversorgung, was beides wenig kompatibel mit dem technologischen Trend zu energieeffizienten, kompakten, mobilen und einfach einzusetzenden Laserlichtquellen ist.

Eine alternative Möglichkeit der (Puls-)Energieregelung von Lasern basiert auf dem Einsatz variabler Strahlabschwächer. Im Vergleich zu aktiven Güteschaltern hat diese, gleichfalls in einer Reihe kommerzieller Produkte umgesetzte, Methode den Vorteil einer deutlich einfacheren Regelung. Nachteilig ist, neben dem Aufwand für zusätzliche, mechanisch bewegte optische Komponenten sowie den damit verbundenen möglichen negativen Einflüssen auf Strahlqualität sowie Größe und Robustheit der Laserlichtquelle, dass überschüssige Pulsenergie vernichtet werden muss, was zu einer signifikant reduzierten Energieeffizienz derartiger Systeme führt.

Die Problematik der einfachen und effizienten Energieregelung von Laserpulsen, insbesonders für kompakte, mobile Laserlichtquellen, bleibt somit ungelöst.

Hier will die Erfindung Abhilfe schaffen.

Gelöst wird diese Aufgabe erfindungsgemäß mit einem Verfahren, welches die Merkmale des Anspruches 1 aufweist.

Bevorzugte und vorteilhafte Verfahrensdetails sowie Anordnungen zur Durchführung dieses Verfahrens sind Gegenstand der Unteransprüche.

Erfindungsgemäß wird die Verwendung eines sättigbaren Absorbers als Güteschalter innerhalb des Laserresonators vorgeschlagen, wobei dieser mit Hilfe einer unabhängig von der Pumpleistung der Laserpumpquelle in ihrer Intensität regelbaren Steuerlichtquelle teilweise vorgesättigt wird, wodurch sich die effektive Durchschaltenergie des sättigbaren Absorbers verändern und somit die Laser-Pulsenergie auf einfache Art und Weise steuern bzw. regeln lässt.

Mit dem Verfahren zur Beeinflussung der Pulsenergie eines gepulsten Lasers gemäß der Erfindung, bei dem sich innerhalb des Laserresonators mindestens ein optischer Güteschalter in Form eines sättigbaren Absorbers befindet und bei dem der sättigbare Absorber durch eine oder mehrere, unabhängig von der Pumpleistung der Laserpumpenquelle(n) in der Intensität variabel Steuerlichtquelle(n) teilweise vorgesättigt wird, verringert sich die für das Durchschalten des sättigbaren Absorbers erforderliche Energie im Laserresonator umgekehrt proportional zu der in den sättigbaren Absorber eingestrahlten Energie der Steuerlichtquelle(n). Somit können Laserpulse mit über die Intensität der Steuerlichtquelle(n) steuerbarer Pulsenergie kleiner gleich der konstruktiv vorgegebenen maximalen Pulsenergie der Laserlichtquelle erzeugt werden.

Die Durchschaltung eines passiven Absorbers mit Hilfe einer externen Strahlungsquelle ist bekannt. Die Methode wird verwendet, um aus einem rein passiven Güteschalter einen, auf einfache Weise modulierbaren, aktiven Güteschalter zu machen und diesen zur zeitlichen Steuerung der Laserpulse einzusetzen. US-B-5 408 480 beschreibt eine derartige Anordnung, bei der ein sättigbarer Absorber mit Hilfe eines Lichtpulses einer sekundären, d.h. nicht zum Pumpen des Lasermediums verwendeten, Lichtemittierenden Diode (LED) durchgeschaltet und dadurch eine frei wählbare zeitliche Abfolge der Laserpulse ermöglicht wird. Analog dazu wird in US-B-6 335 942 eine Anordnung vorgeschlagen, mit deren Hilfe die auftretenden zeitlichen Variabilitäten des Durchschaltens eines passiven sättigbaren Absorbers mit Hilfe einer sekundären Lichtquelle, die den sättigbaren Absorber zu einem definierten Zeitpunkt durchschaltet, eliminiert werden. Eine weitere derartige, auf Mikrolaser abzielende Anordnung ist aus US-A1-2003/0160034 bekannt, wobei wiederum eine sekundäre Strahlungsquelle verwendet wird um einen sättigbaren Absorber durchzuschalten und dadurch die zeitliche Abfolge der Laserpulse zu steuern. Schließlich schlägt WO-A1-2005/101594 eine gleichfalls ähnliche, in diesem Fall auch mit einem monolithischen Laserdesign kompatible Anordnung vor, die unter Verwendung einer schnellen Laserdiode als sekundärer Lichtquelle gezielt zur Herstellung zeitlich kurzer Pulse dienen soll.

Diese und weitere vorbekannte Anordnungen zielen exklusiv auf die Steuerung der zeitlichen Abfolge und/oder der Dauer der Laserpulse hin. Dazu wird in der Laserkavität durch Pumpen Energie aufgebaut, die dann durch Durchschalten des sättigbaren Absorbers mit Hilfe eines Lichtpulses der sekundären Lichtquelle zu einem definierten Zeitpunkt bzw. über eine bestimmte Zeitdauer als Laserstrahlung freigesetzt wird.

Im Gegensatz dazu wird erfindungsgemäß vorgeschlagen bereits bevor der Energieaufbau in der Laserkavität die Durchschaltenergie des sättigbaren Absorbers erreicht, diesen mit Hilfe einer in ihrer Intensität variablen Steuerlichtquelle teilweise vorzusättigen. Dadurch wird ein, über die Intensität der Steuerlichtquelle in einfacher und besonders vorteilhafter Art regelbarer Anteil der für das Durchschalten des sättigbaren Absorbers erforderlichen Lichtmenge unabhängig vom Energieaufbau in der Laserkavität in den sättigbaren Absorber eingestrahlt, wodurch sich das effektiv für die Durchschaltung erforderliche Energieniveau im Laserresonator entsprechend verringert. Sobald die Energie in der Laserkavität die entsprechend der durch die Steuerlichtquelle eingestrahlten Energie reduzierte, effektive Durchschaltschwelle erreicht, schaltet der Güteschalter durch und der Laser emittiert einen Laserpuls mit entsprechend niedrigerer Pulsenergie.

Im Gegensatz zu vorbekannten Systemen wird der Zeitpunkt dieser Emission nicht aktiv über die Steuerlichtquelle gesteuert, sondern ergibt sich aus dem Energieaufbau und dem eingestellten, für die Durchschaltung des sättigbaren Absorbers erforderlichen Energieniveau in der Laserkavität. Die zeitliche Abfolge der Pulse ergibt sich, analog zur üblichen Regelung rein passiver Systeme, aus der, insbesonders kontinuierlich (CW) oder quasi-kontinuierlich moduliert (QCW), eingestrahlten Pumpenergie und der effektiven Durchschaltschwelle des sättigbaren Absorbers und wird nur mittelbar durch die erfindungsgemäß eingesetzte Steuerlichtquelle beeinflusst.

Weitere Einzelheiten, Merkmale und Vorteile des erfindungsgemäßen Verfahrens ergeben sich aus der nachstehenden Beschreibung unter Bezugnahme auf die angeschlossenen Zeichnungen, in welchen auch bevorzugte Ausführungsformen dargestellt sind. Es zeigt Fig. 1a den Energieverlauf und die Laserpulse bei üblicher, vorbekannter Verwendung eines sättigbaren Absorbers am Beispiel einer kontinuierlich (CW) gepumpten, gepulsten Laserlichtquelle, Fig. 1 b die entsprechenden Effekte bei Reduktion der effektiven Durchschaltschwelle des sättigbaren Absorbers mittels erfindungsgemäßer Verwendung einer Steuerlichtquelle, Fig. 2 einen zur Durchführung des erfindungsgemäßen Verfahrens bevorzugten, prinzipiellen Aufbau anhand einer beispielhaften diskreten Anordnung einer Laserlichtquelle und Fig. 3 und Fig. 4 besonders bevorzugte Ausführungsformen zum Einsatz des erfindungsgemäßen Verfahrens zur Regelung der Laserpulsenergie in kompakten, Laserdioden-gepumpten monolithischen Festkörperlasern.

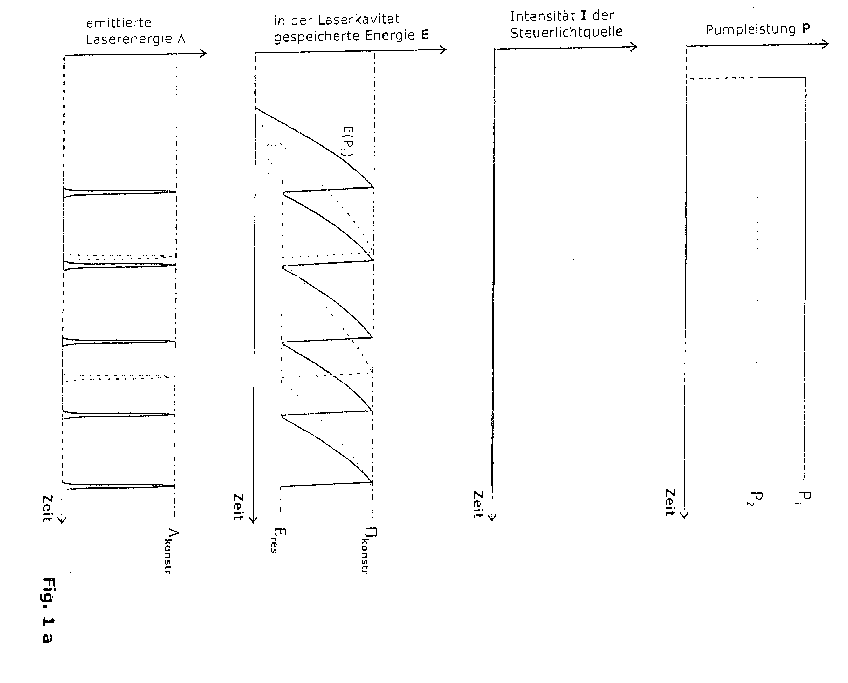

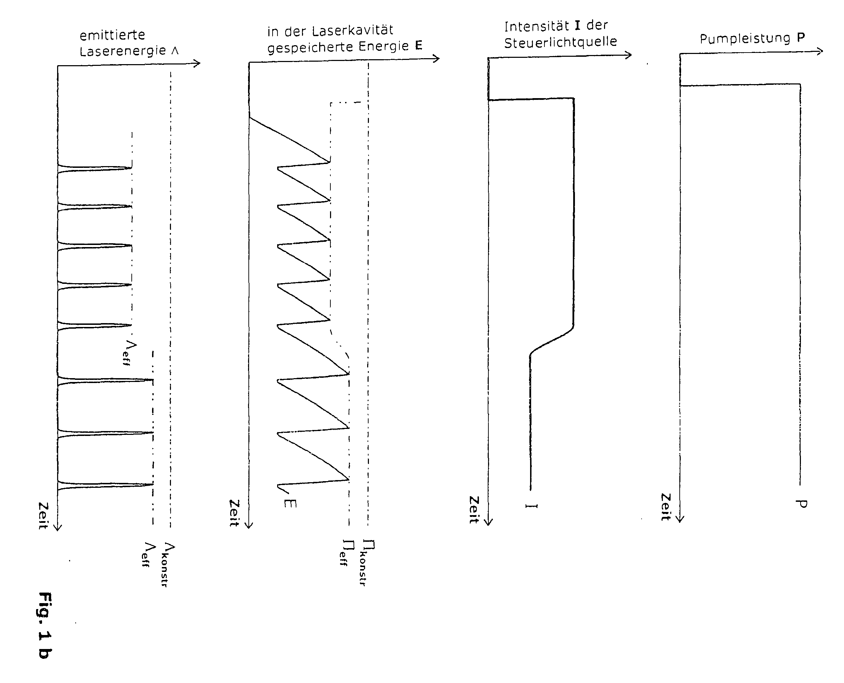

In einem klassischen, passiv gütegeschalteten Laser wird durch Einstrahlung von Pumpenergie in ein Lasermedium in der Laserkavität Energie E aufgebaut. Durch die Anwesenheit eines, zunächst opaken und somit optisch wenig durchlässigen, passiven Güteschalters in der Laserkavität ergibt sich eine Rückkopplung geringer Güte. In Folge der fortgesetzten Einstrahlung von Pumpenergie führt dies zu einer Energiekumulation im Laserresonator. Ein sättigbarer Absorber ist nun dadurch gekennzeichnet, dass er bei einer bestimmten Belastung mit optischer Strahlung, der so genannten Durchschaltenergie Π, reversibel "ausbleicht" und somit zumindest für die Laserwellenlänge transparent wird. In Folge dieses Ausbleichens ist nunmehr die zur effizienten stimulierten Emission von Laserphotonen aus dem Lasermedium erforderliche resonante Rückkopplung zwischen den Resonatorspiegeln mit hoher Güte möglich und ein Teil der im Resonator gespeicherten Energie E wird als intensiver Laserpuls mit der Pulsenergie Λ abgegeben. In Folge der durch die Energieabgabe nunmehr wiederum unter die Durchschaltenergie Π verringerten Residualenergie Eᵣₑₛ im Resonator wird der sättigbare Absorber wieder opak. Bei fortgesetzter bzw. erneuter Einstrahlung von Pumpenergie beginnt in Folge der beschriebene Zyklus, ausgehend von der verbliebenen Residualenergie Eᵣₑₛ, von neuem, wie in Fig. 1 a beispielhaft illustriert.

Die Pulsenergie Λ der so generierten Laserpulse hängt von der Durchschaltenergie Π des sättigbaren Absorbers und der nach der Pulsabgabe verbleibenden Residualenergie Eᵣₑₛ im Laserresonator ab. Π ist praktisch nur von der Art und Zusammensetzung des sättigbaren Absorbers sowie von dessen geometrischen Eigenschaften, insbesonders von der Dicke in Emissionsrichtung des Lasers, abhängig und somit konstruktiv festgelegt, was in Folge durch die Bezeichnung Πₖₒₙₛₜᵣ ausgedrückt wird. Eᵣₑₛ wird von einer Vielzahl von Faktoren beeinflusst, ist aber gleichfalls konstruktiv festgelegt und somit ebenfalls nicht auf einfache Art und Weise variierbar. Somit ist die erzielbare, der Energiedifferenz Pₖₒₙₛₜᵣ - Eᵣₑₛ proportionale Pulsenergie Λ in mit sättigbaren Absorbern passiv gütegeschalteten Lasern grundsätzlich konstruktiv festgelegt, was in Folge durch die Bezeichnung Λₖₒₙₛₜᵣ ausgedrückt wird.

Dem erfindungsgemäßen Verfahren zufolge wird nunmehr zumindest eine Steuerlichtquelle 40 verwendet, um zumindest einem im Laserresonator angeordneten sättigbaren Absorber 30, 31, gezielt und unabhängig vom Energieaufbau im Lasermedium 10, 11, optische Energie zuzuführen. Die Konsequenzen einer derartigen Vorgangsweise sind exemplarisch in Fig. 1 b dargestellt. Durch die zusätzliche, unabhängig vom Energieaufbau im Laserresonator auf den sättigbaren Absorber einwirkende Energie verringert sich die effektive, zum Durchschalten des sättigbaren Absorbers im Laserresonator erforderliche Energie E von E = Πₖₒₙₛₜᵣ zu E = Π_{eff}. Dies bedeutet, dass der sättigbare Absorber bereits bei einer geringeren in der Laserkavität gespeicherten Energie E durchschaltet und somit ein Laserpuls emittiert wird. Entsprechend der geringeren zum Zeitpunkt der Pulsemission im Resonator gespeicherten und somit zur Verfügung stehenden Energie Π_{eff} - Eᵣₑₛ hat dieser Laserpuls nunmehr eine, im Vergleich zur konstruktiv vorgegebenen Pulsenergie Λₖₒₙₛₜᵣ verminderte, Pulsenergie Λ_{eff}. Das erfindungsgemäße Verfahren ist dabei unabhängig von der Art des Pumpens des Lasermediums 10 einsetzbar. Obige Beschreibung sowie Fig. 1 a und 1 b stellen die Vorgänge beispielhaft für die Verwendung kontinuierlicher (CW) Pumpquellen 20 dar. Analog dazu ist das erfindungsgemäße Verfahren zur Pulsleistungsregelung gepulster Laserlichtquellen insbesondere auch für quasi-kontinuierlich (QCW) gepumpte Laserlichtquellen anwendbar.

Durch Variation der Intensität I der Steuerlichtquelle 40 ist es nunmehr auf einfache Art und Weise möglich, die Pulsenergie Λ_{eff} zu regeln. Π_{eff}, und in Folge Λ_{eff}, sind dabei umgekehrt proportional zur von der Steuerlichtquelle 40 in den sättigbaren Absorber 30, 31 eingestrahlten Intensität I. Dies ist beispielhaft in Fig. 1 b illustriert, wo gezeigt wird, dass eine Änderung der Intensität I der Steuerlichtquelle eine Änderung der effektiven erforderlichen Durchschaltenergie Π_{eff} und in Folge eine Änderung der resultierenden Laserpulsenergie Λ_{eff} zur Folge hat.

Das Maß der möglichen Änderung und somit die Regelbreite der Pulsenergie hängt primär von dem Bereich ab, in dem Intensität I der Steuerlichtquelle geregelt werden kann, sowie von der konstruktiven Durchschaltenergie Πₖₒₙₛₜᵣ des sättigbaren Absorbers und dem maximalen möglichen Energiegehalt des Lasermediums. Zur effektiven Anwendung des erfindungsgemäßen Verfahrens ist es sinnvoll und vorteilhaft, dass die maximal in das Lasermedium einkoppelbare Energie E größer als die Durchschaltschwelle Πₖₒₙₛₜᵣ ist. Bei abgeschalteter Steuerlichtquelle 40 verhält sich eine derartige Laserlichtquelle wie ein klassischer, passiv gütegeschalteter Laser und emittiert Laserpulse mit der konstruktiv festgelegten maximalen möglichen Pulsenergie. Mit steigender Intensität I der Steuerlichtquelle reduziert sich die Pulsenergie bis zu der, der maximal in den sättigbaren Absorber einkoppelbaren Intensität I entsprechenden, Pulsenergie Λ_{eff}(I=max). Durch Variation der Intensität der Steuerlichtquelle 40 ist es somit möglich die Laserpulsenergie, vorzugsweise stufenlos, zu steuern bzw. zu regeln.

Wie in Fig. 1 a und Fig. 1 b beispielhaft dargestellt bewirkt der Einsatz des erfindungsgemäßen Verfahrens zur Regelung der Pulsenergie gepulster Laser neben der Änderung der Pulsenergie, auch eine Änderung der zeitlichen Abfolge der emittierten Laserpulse, wobei die Pulsfrequenz mit steigender Pulsenergie abnimmt. Dies kann vorzugsweise durch eine Änderung der Pumpleistung P kompensiert werden, wie in Fig. 1 a exemplarisch für einen nicht energiegeregelten Laser mit passivem Güteschalter, entsprechend dem Betrieb einer erfindungsgemäßen Anordnung mit I = 0, gezeigt. Eine Änderung der Pumpleistung P verändert die Zeitdynamik des Energieaufbaus in der Laserkavität, nicht aber die Pulsenergien. Eine Verminderung der Pumpleistung bewirkt eine Erhöhung der Zeitspanne bis die im Laserresonator gespeicherte Energie E die Durchschaltschwelle Πₖₒₙₛₜᵣ erreicht und dadurch eine Verringerung der Pulsfrequenz. Umgekehrt hat eine Erhöhung der Pumpleistung P den gegenteiligen Effekt. Die für die Pulsenergie Λ relevanten Energieniveaus Πₖₒₙₛₜᵣ bzw. Π_{eff} und Eᵣₑₛ werden durch Änderungen der Pumpleistung P nicht beeinflusst, womit die Pulsenergien Λₖₒₙₛₜᵣ bzw. Λ_{eff} unverändert bleiben. Somit ermöglicht eine kombinierte Regelung der Intensität I der Steuerlichtquelle 40 und der Pumpleistung P der Pumpquelle 20 auf besonders vorteilhafte Art und Weise eine exakte Regelung von Pulsenergie und Pulsfrequenz eines passiv gütegeschalteten Lasers.

Bei Anwendung des erfindungsgemäßen Verfahrens auf quasi-kontinuierlich (QCW) gepumpte Laserlichtquellen ist es vorteilhaft, ergänzend oder auch alternativ zur Regelung der Pumpleistung eine Regelung der zeitlichen Abfolge der Pumppulse vorzunehmen. Bei QCW-gepumpten Laserlichtquellen erfolgt die Regelung üblicherweise über die Pumppulse, wobei ein Pumppuls einen (Einzelpulsbetrieb), einige wenige (Laserburst-Betrieb) oder analog zu CW-gepumpten Anordnungen, kurze Pulssequenzen emittierter Laserpulse generieren kann. Unabhängig davon bewirkt die Verwendung der erfindungsgemäßen Pulsleistungsregelung auch hier Änderungen der emittierten Pulssequenz. So verschiebt sich in Folge der Reduktion der effektiven Durchschaltschwelle Π_{eff} der Zeitpunkt der Emission innerhalb des Pumppulses zu kürzeren Zeiten bzw. kann es auch zu - unter Umständen unzulässigen - Doppel- oder Mehrfachpulsen kommen. Dies kann, ergänzend oder alternativ zu einer Anpassung der Energie der Pumppulse, in vorteilhafter Art und Weise durch eine Regelung der zeitlichen Abfolge und Dauer der Pumppulse berücksichtigt werden.

Als Sonderfall der Anwendung ist bei CW-gepumpten Laserlichtquellen, zumindest prinzipiell, ein Betrieb bis hin zu einer kontinuierlich emittierenden (CW) Laserlichtquelle möglich. In diesem Fall ist eine Steuerlichtquelle 40 erforderlich, welche intensiv genug ist um den sättigbaren Absorber 30, 31 alleine, d.h. ohne Beitrag der im Lasermedium gespeicherten Energie E, durchzuschalten. Bei Betrieb der Steuerlichtquelle 40 mit niedriger Intensität I emittiert ein derartiger Laser Laserpulse mit entsprechend der Intensität I gesteuerter Pulsenergie; bei hoher Intensität I größer gleich der konstruktiven Durchschaltenenergie Πₖₒₙₛₜᵣ des sättigbaren Absorbers 30, 31 entfällt die Energiekumulation und die Laserlichtquelle emittiert kontinuierlich.

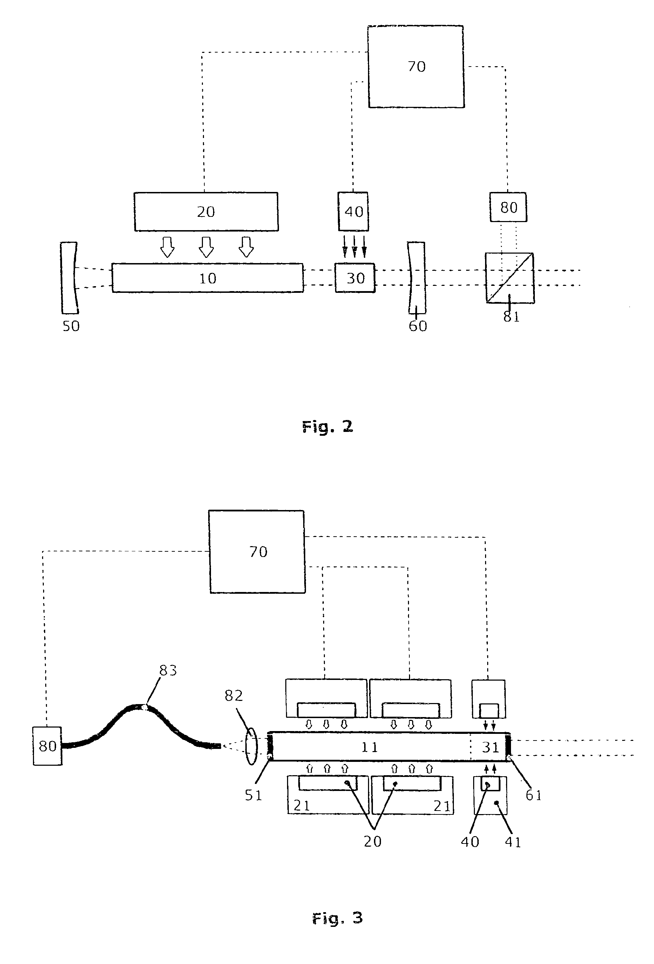

Ein prinzipieller, zur Durchführung des erfindungsgemäßen Verfahrens geeigneter Aufbau ist in Fig. 2 dargestellt. Kern des Aufbaus ist ein Lasermedium 10, welches von einer Pumpquelle 20 mit Pumpenergie versorgt wird. Das Lasermedium ist, gemeinsam mit einem sättigbaren Absorber 30 in einer, durch einen hochreflektierenden Endspiegel 50 und einen teilreflektierenden Auskoppelspiegel 60 begrenzten, Laserkavität angeordnet. Lasermedium 10, sättigbarer Absorber 30 und die beiden Spiegel 50, 60 bilden zusammen den Laserresonator. Zur Durchführung des Verfahrens ist, zusätzlich zu diesem, dem Stand der Technik entsprechenden Aufbau, eine in den sättigbaren Absorber 30 einstrahlende Steuerlichtquelle 40 vorgesehen. Ergänzend ist eine, vorzugsweise gemeinsame, elektronische Lasersteuerung 70 mit Funktionalitäten zur Steuerung bzw. Regelung der Steuerlichtquelle 40 sowie der Pumpquelle 20 vorgesehen. Zur Regelung des Lasers ist zudem eine Messanordnung zur Echtzeit-Erfassung der Pulsenergie und/oder der Pulssequenz, bestehend beispielsweise aus einem geeigneten Sensor 80 in Kombination mit einem im Laserstrahlengang angeordneten Strahlteiler 81 sinnvoll.

Aus dem in Fig. 2 dargestellten prinzipiellen Aufbau ergeben sich weitere besondere Vorteile des erfindungsgemäßen Verfahrens zur Regelung der Laserpulsenergie. Das Verfahren ist grundsätzlich für jede bekannte Art mittels sättigbarer Absorber passiv gütegeschalteter Laser einsetzbar. Weiters werden, im Vergleich zu gleichartigen, nicht energiegeregelten Laserlichtquellen, nur die Steuerlichtquelle(n) 40 als zusätzliche Komponente benötigt, die zudem, da sie nicht im Laserstrahlengang angeordnet ist, und die optische Laserauslegung nicht beeinflusst. Dem entsprechend ist es möglich, Laser ohne Änderung ihrer optischen Eigenschaften mit einer derartigen Laserpulsregelung auszustatten bzw. unter Umständen auch nachzurüsten.

Die Auswahl der Steuerlichtquelle 40 wird im Wesentlichen durch die Eigenschaften des zu steuernden sättigbaren Absorbers 30, 31 beeinflusst. Neben der Intensität der Steuerlichtquelle ist insbesonders die Wellenlänge relevant. Hier kann/können eine oder mehrere beliebige Wellenlängen innerhalb des Absorptionsbereichs des sättigbaren Absorbers 30, 31 gewählt werden. Vorteilhafterweise werden Lichtquellen als Steuerlichtquellen verwendet, die über den erforderlichen Intensitätsbereich einfach, zuverlässig, reproduzierbar und vorzugsweise stufenlos regelbar sind, einen guten Wirkungsgrad haben und, vorzugsweise kostengünstig, kommerziell verfügbar sind. Dem entsprechend werden als Steuerlichtquellen 40 vorzugsweise Laserdioden mit, besonders vorzugsweise über den Strom, regelbarer Intensität verwendet, die vorzugsweise in kontinuierlich emittierendem (CW) Modus betrieben werden können. Alternativ ist auch eine Verwendung schneller, vorzugsweise mit Pulsfrequenzen mindestens eine Größenordnung über der Relaxationsfrequenz des betreffenden sättigbaren Absorbers 30, 31, gepulster Laserdioden möglich. Die Regelung der Intensität I einer derartige Dioden verwendenden Steuerlichtquelle 40 kann dabei über die Pulsenergie und/oder die Pulsfrequenz erfolgen.

Bei Anwendung des erfindungsgemäßen Verfahrens auf CW-gepumpte Laserlichtquellen werden die Steuerlichtquellen 40 vorzugsweise kontinuierlich betrieben. Bei Einsatz in QCW-gepumpten Laserlichtquellen ist der bevorzugte Betriebszustand der Steuerlichtquelle(n) 40 primär von der Pulsfrequenz der Laserlichtquelle abhängig. Bei höheren Pulsfrequenzen werden die als Steuerlichtquellen 40 verwendeten Laserdioden vorzugsweise während der gesamten Pulssequenz kontinuierlich betrieben. Bei niedrigen Pulsfrequenzen oder der Emission von Einzelpulsen oder Puls-Burst ist es hingegen, aus Gründen der Energieeffizenz wie auch zur Erhöhung der Lebensdauer der Steuerlichtquelle(n) 40, häufig vorteilhafter, die Steuerlichtquelle(n) 40 in Abhängigkeit der Pulssequenzen der Pumpquelle(n) 20 gleichfalls quasi-kontinuierlich zu betreiben und zu Zeiten, zu denen kein Laserpuls emittiert werden soll, zu deaktivieren. Die Grenze zwischen den beiden Betriebsmodi ist dabei von der Dynamik des Systems und hier insbesonders der Relaxationszeit des jeweilig verwendeten sättigbaren Absorbers 30, 31 bestimmt. In jeden Fall müssen die Steuerlichtquelle(n) 40 so betrieben werden, dass, unter Berücksichtung der zeitlichen Dynamik des Systems, das gewünschte Vorsättigungsniveau des sättigbaren Absorbers und somit die gewählte effektive Durchschaltschwelle Π_{eff} vor dem Erreichen der Durchschaltenergie in Folge des Energieaufbaus in der Laserkavität erreicht ist. Dies sicherzustellen ist eine weitere Aufgabe der gemeinsamen Lasersteuerung 70.

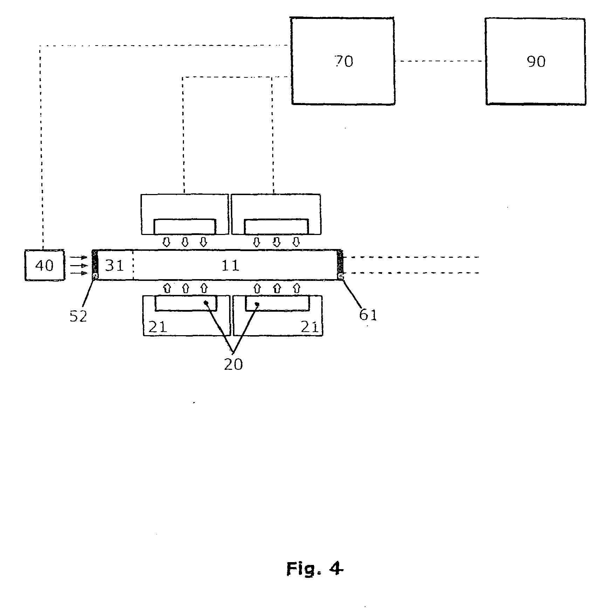

Die Anordnung der Steuerlichtquelle 40 relativ zum sättigbaren Absorber 30, 31 ist applikationsspezifisch frei wählbar. Neben den in Fig. 3 und Fig. 4 beispielhaft dargestellten Anordnungen sind alle aus der Literatur für die zeitliche Steuerung der Emission von Laserpulsen mittels aktiver optischer Durchschaltung eines sättigbaren Absorbers bekannten Anordnungen, wie auch eine frontale Einkopplung über einen im Laserstrahlengang angeordneten Strahlteiler (z.B. US-B-6 335-942, WO-A1-2005/101594), möglich.

Zur Regelung der Pulsenergie sowie gegebenenfalls der Pulssequenz(en) ist es vorteilhaft, Pulsenergie und Pulsintervalle zu messen und diese Daten der elektronischen Steuereinheit 70 des Lasers zuzuführen. Die Steuereinheit 70, beispielsweise ein Mikrocontroller, verarbeitet diese Daten und regelt die Steuerlichtquelle(n) 40 sowie vorzugsweise auch die Pumpquelle(n) 20. Die Messung der Laserenergie erfolgt vorzugsweise mit Hilfe einer geeigneten, in die Laserlichtquelle integrierten Anordnung, wie beispielsweise in Fig. 3 80, 82, 83 dargestellt. Alternativ können auch an den Laser angesetzte Messanordnungen, wie schematisch in Fig. 2 dargestellt 80, 81, oder externe Laserdetektoren, die eine Regelung beispielsweise über eine übergeordnete Anlagensteuerung 90 bewirken, eingesetzt werden. Die Laserpulsfrequenz kann dabei direkt gemessen oder, beispielsweise durch die Lasersteuerung 70, aus der zeitlichen Abfolge der Einzelpuls-Energiedaten ermittelt werden.

Besonders vorteilhaft ist das erfindungsgemäße Verfahren in Hinblick auf die Möglichkeit zur Pulsenergieregelung in kompakten, mobilen Laserlichtquellen hoher Pulsenergie und guter Energieeffizienz. Derartige Systeme sind, beispielsweise für die Zündung von Kraftstoffgemischen in einem (KFZ-) Motor, aus EP-A-1 519 038 und EP-A-1 519 039 bekannt. Eine weitergehende Integration, unter Verwendung monolithischer Festkörper-Lasermedium/Güteschalter - Kombinationen, wodurch bei minimalem Justieraufwand ein maximaler Grad an Betriebssicherheit und Robustheit erreicht werden kann, ist beispielsweise aus WO-A-2004/034523 oder auch der österreichischen Patentanmeldung A 1004/2006 bekannt.

Zwei mögliche Ausführungsformen mobiler, kompakter Laserlichtquellen mit nach dem erfindungsgemäßen Verfahren regelbarer hoher Pulsenergie sind in Fig. 3 und Fig. 4 dargestellt.

In Fig. 3 ist eine Anordnung dargestellt, die einen monolithischen Laserresonator, bestehend aus dem Lasermedium 11, beispielsweise einem Nd:YAG-Element, einem direkt daran angeformten sättigbaren Absorber 31, beispielsweise einem Cr⁴⁺:YAG-Element, sowie an Lasermedium bzw. sättigbaren Absorber angeformten Resonatorspiegeln 51, 61. Als Resonatorspiegel werden dabei vorzugsweise mehrlagige dielektrische Beschichtungen verwendet, wobei der Endspiegel 51 als bei der Laserwellenlänge hochreflektierend und der Auskoppelspiegel 61 als teilreflektierend ausgeführt wird. Die Pumplichtquellen 20 sind in dieser Anordnung in Pumpringen 21 ringförmig radial um das Lasermedium 11 angeordnet. Die Steuerlichtquellen 40 zur Regelung der Durchschaltenergie des sättigbaren Absorbers 31 sind gleichfalls ringförmig radial in einem Trägerring 41 um den sättigbaren Absorber 31 angeordnet. Zur Messung der Laserpulsenergie sowie der Pulsfrequenz ist in dieser Anordnung hinter dem hochreflektierenden Spiegel 51 eine Sammeloptik 82 angeordnet, welche die, der Laserpulsenergie proportionale, durch den hochreflektierenden Spiegel transmittierte Energie sammelt und in eine optische Faser 83 einkoppelt. Diese optische Faser überträgt die Energie zu einem Sensor 80, der die Pulsenergie misst und an die Lasersteuerung 70 übermittelt. Alternativ wäre es auch möglich, den Sensor 80 ohne Faser direkt hinter Sammeloptik 82 anzuordnen oder unter Umständen auch ohne zwischengeschaltete Optik direkt hinter dem hochreflektierenden Spiegel 51. Die Lasersteuerung ermittelt in Folge aus den Messdaten des Sensors 80 Pulsenergie und die Pulssequenz, vergleicht diese mit den vorgegebenen Sollwerten und veranlasst gegebenenfalls eine Nachregelung der Steuerlichtquellen 40 und/oder der Pumpquellen 20.

In Fig. 4 ist ein gleichfalls radial gepumpter Festkörperlaser mit monolithischem Laserresonator dargestellt, wobei in dieser Ausführungsform die Steuerlichtquelle 40 zur Regelung der Durchschaltenergie des sättigbaren Absorbers 31 axial angeordnet ist. Um diese axiale Energieeinkopplung zu ermöglichen, ist der Resonatorspiegel 52 für die Laserwellenlänge hochreflektierend, für die Wellenlänge der Steuerlichtquelle 40 vorzugsweise hochdurchlässig, beispielsweise mittels Anti-Reflexbeschichtung, ausgeführt. Die Messung der Laserpulsenergie bzw. der Pulsfrequenz erfolgt in dieser Anordnung, falls erforderlich, über eine externe Messanordnung, die Rückmeldung erfolgt über eine der Lasersteuerung 70 übergeordnete Anlagensteuerung 90.

Zusammenfassend kann ein Ausführungsbeispiel der Erfindung wie folgt dargestellt werden:
Die Erfindung betrifft ein Verfahren zur einfachen und energieeffizienten Regelung der Pulsenergie gepumpter Laser. Erfindungsgemäß wird der Einsatz eines sättigbaren Absorbers 30, 31 als optischer Güteschalter innerhalb des Laserresonators vorgeschlagen, wobei dieser mit Hilfe einer unabhängig von der Pumpleistung der Laserpumpquellen 20 in ihrer Intensität regelbaren Steuerlichtquelle 40 teilweise vorgesättigt wird, wodurch sich die effektive Durchschaltenergie des sättigbaren Absorbers verändern und somit die Laser-Pulsenergie auf einfache Art und Weise regeln lässt. Besonders vorteilhaft ist das erfindungsgemäße Verfahren zur Regelung der Energie von Laserpulsen in kompakten, beispielsweise monolithisch aufgebauten Laserlichtquellen.

## Patentansprüche

1. Verfahren zum Beeinflussen der Pulsenergie eines gepulsten Lasers mit einem Laserresonator, **dadurch gekennzeichnet, dass** dem Laserresonator mindestens ein optischer Güteschalter in Form eines sättigbaren Absorbers (30, 31) zugeordnet wird und dass der sättigbare Absorber (30, 31) durch wenigstens eine in der Intensität variable Steuerlichtquelle (40) teilweise vorgesättigt wird.

2. Verfahren nach Anspruch 1, **dadurch gekennzeichnet, dass** das Ausmaß der Vorsättigung des sättigbaren Absorbers (30, 31) über Variation der Intensität der Steuerlichtquelle (40) unabhängig von der Pumpleistung der wenigstens einer Laserpumpquelle (20) geregelt wird.

3. Verfahren nach Anspruch 1 oder 2, **dadurch gekennzeichnet, dass** die Intensität der Steuerlichtquelle (40) stufenlos geregelt wird.

4. Verfahren nach einem der Ansprüche 1 bis 3, **dadurch gekennzeichnet, dass** die Pulsfrequenz der energiegeregelten Laserlichtquelle mittels, vorzugsweise stufenloser, Regelung der von der Pumpquelle (20) in das Lasermedium (10, 11) eingestrahlten Pumpleistung geregelt wird.

5. Verfahren nach Anspruch 4, **dadurch gekennzeichnet, dass** die Pulsfrequenz der Laserlichtquelle ohne Beeinflussen der Pulsenergie geregelt wird.

6. Verfahren nach einem der Ansprüche 1 bis 5, **dadurch gekennzeichnet, dass** die Pulsfrequenz einer energiegeregelten quasi-kontinuierlich (QCW) gepumpten Laserlichtquelle, alternativ oder in Ergänzung zur Regelung über die der Pumpleistung, über die zeitliche Regelung der von der Pumpquelle (20) emittierten Pumppulse geregelt wird.

7. Verfahren nach Anspruch 6, **dadurch gekennzeichnet, dass** die Pulsfrequenz der Laserlichtquelle ohne Beeinflussen der Pulsenergie geregelt wird.

8. Verfahren nach einem der Ansprüche 1 bis 7, **dadurch gekennzeichnet, dass**, zur Regelung der von der Laserlichtquelle emittierten Laserpulsenergie und/oder der Pulssequenz, die Laserpulsenergie, sowie gegebenenfalls auch die Pulsintervalle, erfasst und der Lasersteuerung (70) zugeführt wird, und dass die Lasersteuerung (70) basierend auf der so erfassten Laserpulsenergie die Intensität der Steuerlichtquelle (40) und/oder die Pumpleistung und/oder Pumpsequenz der Pumpquelle(n) (20) geregelt wird.

9. Verfahren nach Anspruch 8, **dadurch gekennzeichnet, dass** die Laserpulsenergie und gegebenenfalls die Pulsfrequenz durch interne und/oder externe Messanordnungen (80, 81; 80, 82, 83; 90) erfasst wird.

10. Verfahren nach einem der Ansprüche 1 bis 9, **dadurch gekennzeichnet, dass** als Steuerlichtquelle (40) eine im kontinuierlichen (CW) oder quasi-kontinuierlichen (QCW) Emissionsmodus betriebene Laserdiode verwendet wird und dass die Intensität der Steuerlichtquelle (40) vorzugsweise über den Diodenstrom der Laserdioden geregelt wird.

11. Verfahren nach einem der Ansprüche 1 bis 9, **dadurch gekennzeichnet, dass** als Steuerlichtquelle (40) Laserdioden verwendet werden, die bei Frequenzen größer der Relexationsfrequenz des sättigbaren Absorbers (30, 31) gepulst betrieben werden und die Intensität der Steuerlichtquelle (40) über die Frequenz oder/und die Pulsenergie der Laserpulse der Laserdioden geregelt wird.

12. Anordnung zur Durchführung des Verfahrens nach einem der Ansprüche 1 bis 11, **dadurch gekennzeichnet, dass** als Steuerlichtquelle (40) eine Laserdiode mit Emissionswellenlängen im Bereich der nutzbaren Absorptionen des verwendeten sättigbaren Absorbers (30, 31) vorgesehen ist.

13. Anordnung nach Anspruch 12, **dadurch gekennzeichnet, dass** ein monolithischer Laserresonator, bestehend aus einem Festkörper-Lasermedium (11), welchem ein sättigbarer Absorber (31) und die Resonatorspiegel (51, 61) direkt angeformt sind, vorgesehen ist, und dass diesem monolithischen Laserresonator von, vorzugsweise in Trägerringen (21) ringförmig radial angeordnete, Laser-Pumpdioden als Laserpumpquellen (20) zugeordnet sind und dass die wenigstens eine Steuerlichtquelle (40), vorzugsweise in einem Trägerring (41), radial um den in den monolithischen Laserresonator integrierten sättigbaren Absorber (31) angeordnet ist.

14. Anordnung nach Anspruch 12 oder 13, **dadurch gekennzeichnet, dass** ein hochreflektierender Resonatorspiegel (50, 51) vorgesehen ist und dass dem Resonatorspiegel (50, 51) zur Messung der Laserpulsenergie und/oder der Laserpulsfrequenz ein Sensor (80) der die vom Resonatorspiegel (50, 51) transmittierte Laser-Restenergie empfängt, zugeordnet ist.

15. Anordnung nach Anspruch 12, **dadurch gekennzeichnet, dass** ein monolithischer Laserresonator, bestehend aus einem Festkörper-Lasermedium (11), welchem ein sättigbarer Absorber (31) und die Resonatorspiegel (52, 61) direkt angeformt sind, vorgesehen ist, dass diesem monolithischen Laserresonator von, vorzugsweise in Trägerringen (21) ringförmig radial angeordnete, Laser-Pumpdioden als Laserpumpquellen (20) zugeordnet sind, und dass die wenigstens eine Steuerlichtquelle (40) direkt axial zum monolithischen Laserresonator hinter dem, für die Laserwellenlänge hochreflektierend und für die Wellenlänge der Steuerlichtquelle (40) vorzugsweise hochdurchlässig ausgeführten, Resonatorspiegel (52) angeordnet ist.

16. Anordnung nach Anspruch 13 oder 14, **dadurch gekennzeichnet, dass** optische Komponenten, beispielsweise eine Sammeloptik (82) und/oder eine optische Lichtleiterfaser (83) zwischengeschaltet sind.
